# EUROPEAN PATENT APPLICATION

(11) **EP 2 848 305 A2**
(43) Date of publication of application: **18.03.2015**
(21) Application number: 14002988.5
(22) Date of filing: 29.08.2014
(51) Int. Cl.: B01L 3/00, B01D 33/01, G01N 33/49

(54) **Filter vial with limited piston stroke**

(30) Priority: 13.09.2013 US 201361877672 P; 08.08.2014 US 201414445738
(71) Applicant: Scientific Plastic Products, Inc., Oceanside, California 92054 (US)
(72) Inventor: Hingorani, Kishan G., Oceanside, CA 92054 (US); Ellis, Samuel A., Oceanside, CA 92054 (US)
(74) Representative: FDST Patentanwälte

(57) **Abstract**

A filter vial (42) and piston (10) are provided where the vial (42) has a cylindrical wall with a closed bottom and open top and with the hollow, tubular piston (10) therein. The piston (10) has a position stop (23) located and configured to abut a mating position stop on the vial to limit relative movement of the piston (10) and vial (42). The position stops (23) are located to stop the distal end (34) of the piston (10) away from the bottom of the vial a distance of about 10-30% the height (H) of the vial. That a material to be dissolved in a liquid in the vial and to remove unwanted molecules from the liquid with the piston (10) forcing the liquid through the filter (40) but not squeezing the slurry of material so as to force it into the filter.

## Description

### CROSS-REFERENCE TO RELATED APPLICATIONS

The application claims the benefit under 35 U.S.C. § 119(e) to Provisional Patent Application No. 61/877,872 filed September 13, 2013, the entire contents of which are incorporated herein by reference.

### BACKGROUND

Filter vials have a tubular piston with a filter at the distal end of the piston. The piston fits into a mating vial containing a fluid and things suspended in the fluid. When the piston is inserted into the vial fluid passes through the filter and into the piston in order to separate the fluid from particles or molecules too large to pass through the filter in the bottom of the piston. The filtered fluid can be extracted from the piston for further use. In order to maximize the volume of filtered fluid the filter on the piston is placed at the distal end of the piston and during use that filter is pressed against the bottom of the vial in order to force as much fluid through the filter as possible.

In order to increase the volume of filtered fluid the piston end and the bottom of the vial may have mating shapes that help ensure as much fluid is forced through the filter as possible. Such mating shapes are described in U.S. Patent 8,322,539.

In some processes a material is placed into the vial with the liquid and allowed to dissolve in the liquid so as to absorb undesirable molecules, chemicals or things from the liquid. In these processes when the piston is forced against the bottom of the vial the dissolved materials are forced into the piston filter and that may cause the filter to crack and leak - thereby contaminating the filtered fluid in the piston. Sometimes the dissolved material may be forced through the filter if sufficient pressure is applied on the piston. There is thus a need for an improved filter vial that allows the use of dissolvable materials while avoiding contamination of the filtered fluid in the piston by contact with the dissolved or dissolvable material.

### BRIEF SUMMARY

A filter vial and piston are provided where the vial has a cylindrical wall with a closed bottom and open top and with the hollow, tubular piston therein. The piston has a position stop located and configured to abut a mating position stop on the vial to limit relative movement of the piston and vial. The position stops are located to stop the distal end of the piston away from the bottom of the vial a distance of about 10-30% the height of the vial. That a material to be dissolved in a liquid in the vial and to remove unwanted molecules from the liquid with the piston forcing the liquid through the filter but not squeezing the slurry of material so as to force it into the filter

The piston assembly thus has a position stop on it that cooperates with a mating portion of the filter vial to stop the end of the piston from hitting the bottom of the filter vial into which the piston is inserted during use. The length of the filter vial and/or the effective stroke length of the piston assembly are selected so that the distal end of the piston assembly is stopped a predetermined distance from the bottom of the filter vial. A suitable position stop is believed to be an outward extending flange on the piston abutting the upper edge of the filter vial encircling the opening into which the plunger assembly is inserted during use.

The filter vial and piston assembly may use a cup which fits over the distal end of the filter to hold the piston filter in position on the piston during use so that all the fluid passes through the filter and none passes around the edges of the filter. The parts forming the piston assembly are preferably integrally molded of one piece of material and may snap together so that there is no contamination from ultrasonic welding. If the parts snap-fit together, appropriates seals are provided to prevent wicking or leakage at the location of the snap-lock joints.

There is thus advantageously provided a filter vial apparatus having a longitudinal axis with a tubular vial having a closed bottom, an open top and a sidewall extending therebetween and defining a periphery around the open top. The sidewall has an interior height H between the bottom and the open top. The apparatus includes a tubular piston with opposing distal and proximal ends with at least the distal end being open. The piston has walls defining a hollow interior and at least one seal configured to sealingly engage the sidewall of the vial abut an inner circumference of the sidewall when the piston is inserted into the vial. The piston also has having a position stop extending outward from the piston a distance sufficient to abut the periphery around the open top of the vial. The assembly further includes a piston filter connected to the distal end of the filter and blocking the distal end of the piston so any fluid must pass through the filter to enter the hollow interior from the distal end of the piston. The piston and piston filter form a filter assembly. The position stop is located a distance L from the distal end of the piston assembly where the distance L is less than the height H in order to limit the distance which the piston assembly may be inserted into the filter vial during use.

In further variations, the vial sidewall defines a cylindrical interior with a diameter D and the at least one piston seal sealing engages that cylindrical interior. Further, the distance H is less than the distance L by a predetermined amount, which amount is preferably about 10-30% of H and ore preferably about 10-20% of H. The filer may include a vial filter having an upper surface located a distance h from the bottom of the filter vial located and wherein the distance L is less than H - h.

In still further variations there are at least three seals, two of which are adjacent the distal end of the piston and all three of which are located and configured to engage the sidewall of the vial when the piston assembly is inserted into the filter vial. Further, a cup may fit over the distal end of the piston to interpose and hold the filter between the cup and the piston. The cup has at least one opening in its bottom through which fluid can flow to the piston filter.

There is also provided a filter vial assembly that includes a cylindrical walled vial with a closed bottom and open top connected by a sidewall defining a periphery of the open top. The vial may have a hollow, tubular piston therein with a filter connected to a distal end of the piston to prevent fluid from flowing into the distal end of the piston unless it flows through the piston filter. The filter and piston form a piston assembly. The piston has a position stop located and configured to engage a mating position stop on the vial when the piston assembly is inserted into the vial and advanced a predetermined distance toward the bottom of the piston but before the piston assembly abuts the bottom of the vial.

In further variations, the filter vial assembly has a position stop on the piston comprises an outwardly extending projection configured and located to abut the filter vial. The filter vial ma have a vial filter located a distance h from the bottom of the vial and extending across the vial to block the flow of fluid past the vial filter unless the fluid flows through the vial filter. The predetermined distance is then selected so that the piston assembly does not extend past the vial filter during use.

In still further variations, the assembly can include a sorbent phase extraction material located between the vial filter and the bottom of the vial. The extraction material may be selected to remove selected molecules, chemicals or compounds from a liquid sample placed into the vial and in which the extraction material can dissolve. A fluid may be placed in the bottom of the vial and the extraction material selected to dissolve in the fluid and remove selected chemicals, molecules or compounds from the fluid.

In still further variations, a cup may extend over the distal end of the piston with the filter interposed between the cup and the piston to connect the filter to the piston assembly. The cup may have at least one opening in a bottom of the cup to allow fluid access to the filter. The filter vial may have an interior height H between the filter vial bottom and the periphery defining the open top of the filter vial, and the position stop may be a distance L from the distal end of the piston assembly, such that the distance L is less than H to define a residual volume between the piston assembly and the bottom of the vial. Advantageously, the difference between L and H is about 10-30% of H. Preferably, the difference between L and H is about 10-20% of H. The vial may also include a vial filter having an upper surface located a distance h from the bottom of the filter vial located and the distance L may then be less than H - h.

There is also provided a method of filtering a fluid using a filter vial having a cylindrical sidewall defining an open top and having a closed bottom opposite the top, and also having a tubular piston having an open bottom covered by a filter to form a piston assembly. The piston assembly fits into the filter vial to seal against the sidewall and force fluid through the filter and into the body of the piston as the piston filter is advanced toward the bottom of the vial. The method includes the steps of placing a fluid in the bottom of the vial and placing a material in the bottom of the vial where the material is selected to remove chemicals or molecules from the fluid. The order of these steps may be switched. The piston assembly is inserted into the open top of the filter vial and the piston is advanced toward the bottom of the filter vial. The method also includes limiting the distance which the distal end of the piston assembly can advance toward the bottom by causing a position stop on the piston assembly to abut a mating stop on the filter vial, the distance being predetermined.

In further variations of the method the distance which the distal end of the piston assembly is inserted into the vial is between about 10-30% of a height H of the interior sidewall of the filter vial. The insertion distance is preferably between about 10-20% of a height H of the interior sidewall of the filter vial. The filter vial may include a vial filter having an upper surface located a distance h from the bottom of the filter vial, with the material being located between the vial filter and the bottom of the vial, and the distance which distal end of the piston assembly is inserted into the vial is limited so the distal end of the piston assembly does not extend past an upper surface of the vial filter.

### BRIEF DESCRIPTION OF THE DRAWINGS

These and other features and advantages of the various embodiments disclosed herein will be better understood with respect to the following description and drawings, in which like numbers refer to like parts throughout, and in which:
Fig. 1 is an exploded side view of a piston, retainer and vial;
Fig. 2 is a sectional view of Fig. 1;
Fig. 3 is a cross-sectional view of the piston and retainer in an assembled configuration;
Fig. 4 is a cross-sectional view of the piston, retainer and vial in an assembled configuration with the piston partially inserted into the vial;
Fig. 5 is an end view of the retainer cup of Fig. 1, looking from the distal end toward the proximal end;
Fig. 6 is an end view of the piston of Fig. 1, looking from the distal end toward the proximal end;
Fig. 7 is a cross sectional view of a further embodiment of a piston assembly for use with the filter vial of this invention;
Fig. 8 is a cross-section of the piston assembly of Fig. 7 inserted into a filter vial with the piston not abutting a vial filter;
Fig. 9 is a cross-section of the piston assembly of Fig. 7 inserted into a filter vial with the piston abutting a vial filter;
Fig. 10 is a schematic view of a kit containing piston assemblies of different stroke length and vials of different height;
Fig. 11 is a sectional view a filter vial and plunger assembly with filtered fluid in the plunger; and
Figs. 12a-12f are further embodiments showing a sub-container extending from a bottom of the vial.

### DETAILED DESCRIPTION

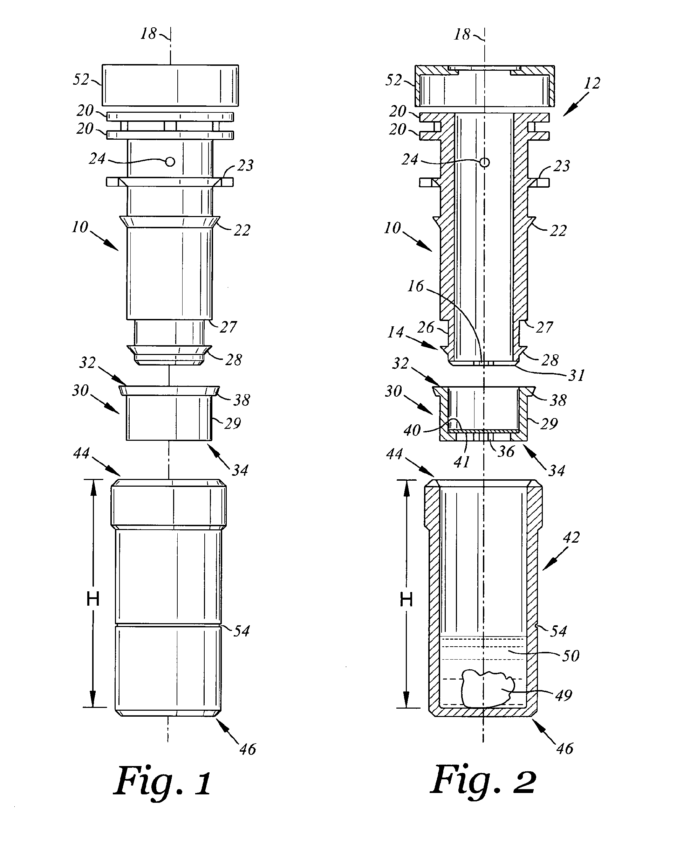

Referring to Figs. 1-4, a tubular piston 10 with a circular cross-section has proximal and distal ends 12, 14, respectively, with a porous piston support 16 located at the distal end 14. The support 16 advantageously takes the form of radial arms intersecting at a central location on the longitudinal axis 18 of the piston 10. The terms distal and proximal refer to relative locations of parts along the longitudinal axis 18, and the terms inward and outward refer to relative directions toward and away from the longitudinal axis 18. One or more flanges 20 extend radially from the proximal end 12. A first, proximal seal 22 is located between the proximal and distal ends 12, 14. The first proximal seal 22 extends outward, away from longitudinal axis 18. A vent hole 24 is adjacent the seal 22 and is preferably located slightly toward the proximal end 12 so as to be between the seal 22 and the proximal end 12 of piston 10 as shown in Fig. 1, and preferably between the stop 23 and the proximal end of the piston.

Between the seal 22 and the proximal end flange 20 is a position stop 23 that extends outward from the outer side of the tubular piston 10, away from longitudinal axis 18. The position stop is located to position the distal end 14 of the piston at a predetermined location relative to the bottom of a vial 42 which is described later. The position stop 23 preferably extends radially outward and advantageously takes the form of a flange similar to flange 20, encircling the outer periphery of the piston 10 in a plan orthogonal to the longitudinal axis 18. But the position stop 23 may take various shapes and may comprise a plurality of separate stops having distal edges in a plane orthogonal to the axis 18.

Adjacent to and preferably extending to the distal end 14 is a recessed area 26 having a smaller diameter than that of the body of piston 10 forming a shoulder 27 at the location of the larger diameter portion of the piston body. An outward extending distal piston flange 28 is located adjacent the distal end 14 in this recessed area. An axially extending tip 31 (Fig. 2) is preferably, but optionally provided that encircles the distal end of the piston 10. The tip 31 preferably has a triangular cross section and is very small.

A retainer cup 30 has an inner diameter sized to fit snugly against the piston recess 26. The retainer cup 30 has proximal and distal ends 32, 34, respectively, with a porous cup support 36 over the distal end 34 and a third, cup seal 38 at the proximal end, extending outward, away from the axis 18. The support 36 is like the support 16. A membrane filter 40 fits inside the retainer cup 30 and abuts the cup support 36. The membrane filter 40 is disc shaped, usually with an axial thickness that is several times smaller than its diameter. In some situations multiple filters 40 can be stacked. An inward extending lip 41 at the distal end 34 of the cup 30 provides an axial support around the periphery of the filter 40. The tip 31 (Fig. 2) on the distal end of the piston 10 presses the filter 40 against this lip 41 when the parts are assembled.

The supports 16, 36 preferably take the form of radial struts or spokes extending from the walls of piston 10 or cup 30, respectively. But the supports 16, 36 could take other forms, such a rectangular or square grid work, or a plate with drain holes therein. A spoke with a triangular cross-section is believed suitable, with the apex of the triangle abutting the filter 40 in order to reduce blockage of the filter. Since supports 16, 36 abut opposing sides of the filter 40, a spoke with a triangular cross section will require orientating the apexes so they are toward each other. While four spokes are shown, six equally spaced spokes are believed preferable. Too many spokes block flow through the filter 40, and too few spokes allow the filter to flex and allow unfiltered fluid to bypass the filter by flowing around the periphery of the filter. The intersection of the spokes at the center is preferably small so as not to block fluid flow through the filter, with a center obstruction of about .1 inches for a piston 10 with an inner diameter of about .3 inches. The dimensions will vary with the sizes and with the strength of the materials used.

A tubular vial 42 has an open proximal end 44 and a closed distal end 46. The vial 42 is sized and shaped so the retainer cup 30 and piston 10 fit within the vial. The vial 42, cup 30 and piston 10 are preferably all cylindrical with a circular cross section, but other shapes could be used. The vial 42 has a height H measured from the inside of the closed distal end 46, to the open proximal end 44 as best seen in Figs. 1-2.

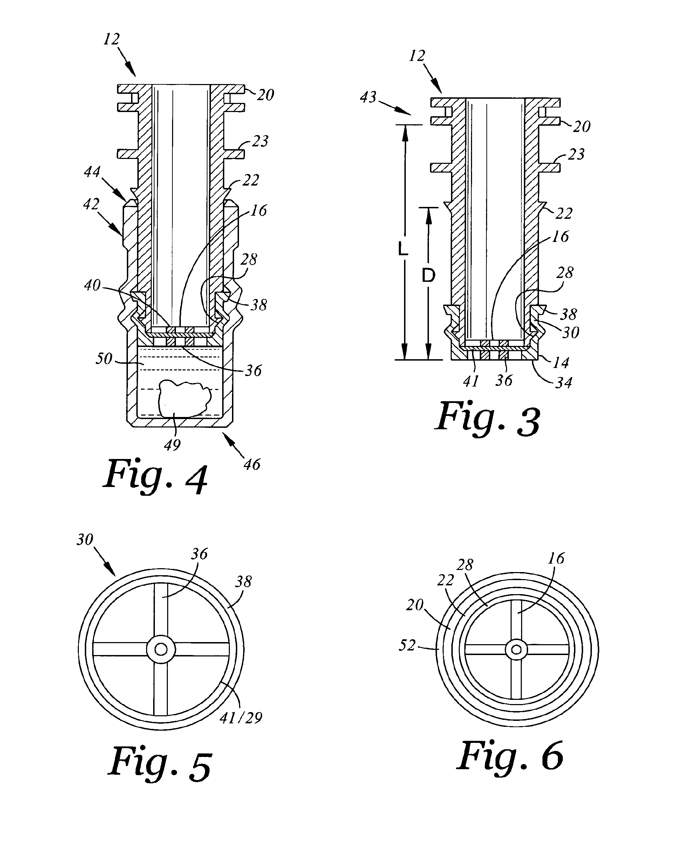

Referring to Fig. 3, the retaining cup 30 fits over piston flange 28 and abuts the recessed portion 26 on distal end 14 of piston 10 so the piston support 16 abuts membrane filter 40 and preferably presses the filter 40 against lip 41 and against cup support 36. Ideally the circular tip 31 provides a concentrated force around the periphery of the filter 40 to clamp the filter against the lip. The filter 40 is thus held in position by the lip 41 and tip 31, and further supported by the supports 16, 36. The tip 31 and lip 41 hold the periphery of the filter 40 in position with the tip 31 providing an axial compression seal against the filter 40. Movement, such as bowing or twisting of the body of the filter 40, is restrained by the supports 16, 36. The combination of supports 16, 36, lip 41 and tip 31 are sufficient so that the seal between the periphery of the filter 40 and lip 41 does not leak as filtrate fluid 50 is forced through the filter 40.

As the retainer cup 30 fits over the recessed portion 26, the flange 28 forces the sidewall 29 of the cup 30 outward to form a fluid tight seal and the proximal end 32 preferably abuts or comes close to shoulder 27. The piston flange 28 is preferably at or very close to the distal end 14 of piston 10, and is interposed between the outer wall of piston 10 and the inner wall of the cup 30 to form a fluid tight seal. Advantageously, the piston support 16 presses the filter 40 against the lip 41 enough to prevent any leakage past the end of the filter 30, and preferably the filter is compressed by the circular periphery of distal end 14 of piston 10, or compressed by the circular periphery of the support 16, so that any fluid wicking between the outer periphery of the filter 10 and the wall 29 of the cup 30, does not enter the cup. The location of the shoulder 27 and the axial length of the sidewall 29 of cup 30 can be selected to achieve a desired amount of compression.

As the retainer cup 30 fits over the recessed portion 26 and the seal 26, the sidewall 29 of the cup 30 is deformed outward so the outer diameter of the assembled cup 30 and piston 10 is slightly larger than the diameter of the piston body 10. The assembled cup 30 and piston 10 form a piston assembly 43(Fig. 3) with the distal side of stop 23 located a distance L from the exterior, distal end 34 of the cup 30 which forms the distal end of the piston assembly. The first, proximal seal 22 is located a distance D from that distal end 34. The length L may be referred to as the stroke length as in the depicted embodiment of Figs. 1-7 the length L also represents the distance that the piston assembly is inserted into the filter vial during use. The distal end of the piston assembly 43 preferably has a chamfered periphery in order to make it easier to have automated handlers manipulate the piston assembly 43 and insert it into a vial 42. Likewise, the vial 42 preferably has an outwardly chamfered opening at the proximal end 44 that makes it easier to insert the distal end of the piston assembly 43. A chamfer of about 30 - 45 degrees is believed suitable.

To assemble the piston assembly 43 the filter 40 is placed inside the retaining cup 30. The cup 30 is then snap fit over piston flange 28 and onto the distal end of the piston 10, and preferably (but optionally) pushed along the piston until an outwardly extend cup seal 38 on the open, proximal end of the cup 30 abuts the shoulder 27 on the piston. At this point the filter 40 is held between the distal end of the piston 10 and lip 41, and preferably held between the piston support 16 and cup support 36 and lip 41. This assembly also forms two outwardly extending portions, one at the location where the piston flange 28 forces the sidewall 29 of cup 30 outward, and the other at the location of cup seal 38. Both of these seal locations are larger than the inside of tubular vial 42 and form two seals with the sidewall of the vial 42 when the relevant portions of the piston assembly 43 are placed inside the vial 42. Both of these seal locations are preferably separated by a distance sufficient that the wall of the vial 42 extends inward toward longitudinal axis 18 a slight distance in order to ensure a good fluid-tight seal at both locations.

During use, the piston assembly 43 is fit into vial 42 to force fluid or filtrate 50 through the filter 40 and into the hollow interior of the tubular piston 10. Preferably, but optionally, the piston flange 28 bulges the sidewall 29 of cup 30 outward enough to form a fluid tight seal with the inner walls of vial 42. The seal 38 is also sized relative to the inner walls of vial 42 to form a fluid tight seal with the vial. Advantageously, there are thus two outward facing seals adjacent the distal end 14 of the piston 10 which seal against the interior walls of vial 42.

During use, a material 49 and liquid 50 are placed in the bottom of vial 42. The material 49 may be selected to interact with the liquid 50 and bind to selected portions of the liquid, be they specific molecules, gases, chemicals or compounds either by adsorption, absorption, ionic binding or other attachment mechanisms. The material 49 is preferably selected to absorb selected one or more selected portions of the liquid 50 and may be referred to as a selective binding material for convenience. Preferably, the material 49 comprises a material that removes unwanted or undesirable things from the liquid 50. The material 49 may comprise a sorbent phase extraction material selected to absorb undesirable portions of the liquid 50. The material 49 is preferably a solid material and may be a powder, granular or larger block sized materials.

The material 49 and liquid 50 are typically left in the vial 42 for a period of time that can vary but is typically from about 1 to 48 hours more typically about 24 hours. In some cases it may be a matter of a few minutes to a few hours, but it is usually longer. The exact time will vary with the particular liquid 50 and material 49 involved. During this time the material 49 usually dissolves in the liquid 50 and forms a slurry of smaller particles intermixed with the liquid 50. The removable cap 52 may be placed over the open proximal end 44 of the vial during this period to avoid contamination and to allow shaking or other agitation of the contents of the vial 42 so that the material 49 and liquid 50 are well intermixed. The amount of agitation, if any, will vary with the liquid 50 and material 49, as will the temperature and other processing conditions. Instead of a removable cap 52, the piston assembly 43 may be inserted sufficiently into the open end 44 of the vial 42 to seal the end of the vial and enclose the material 49 and liquid 50 within the vial 42.

After the material 49 and liquid 50 are suitably mixed the piston assembly 43 is used to separate the desired liquid from the material 49. The cap 52 is removed (if present) and the distal end of the piston assembly 43 is placed in the open end 44 of the vial 42. The piston 10 is then advanced along longitudinal axis 18 so that fluid or filtrate 50 passes though filter 40 and into the body of piston 10, with air or other gases escaping through vent 24. Eventually the seal 22 enters the vial 42 and also seals against the inner walls of vial 42. Filtrate 50 passing through the filter 40 is in the hollow body of piston 10 where it can be removed directly, or through an opening in cap 52 which is fitted over the proximal end 12 of the piston 10. Materials entrained in the filtrate 50 which are too large to fit through the filter 40 are retained between the filter 40 and the closed distal end 46 of the vial. Preferably the cap 52 forms a snap fit with the proximal end of the piston 10, and more preferably has an inwardly extending rim or lip that forms a snap-fit over flange(s) 20 on the piston 10.

In the preferred separation a portion of the liquid 50 is left intermixed with the material 49 so that a slurry remains and a portion of the liquid 50 is not forced through the piston filter and into the piston 10. The piston 10 and vial 42 are configured thus so that the distal end of the piston assembly 43 does not abut the bottom 46 of the vial 42 and does not compact the slurry so as to separate as much liquid as possible from the solid material 49 and compact the remaining material 49 into a contiguous, but wet mass of material at the bottom of the vial. Advantageously, the piston assembly does not compact the material 49 so as to force portions of the material into the porous filter(s) of the piston assembly 43. In some cases the liquid 50 and material 49 intermix and then over time the material settles out on the bottom of the vial 42, leaving a purified liquid above the settled material and in such cases the filter 40 on the piston is stopped before abutting the material 49 settled on the bottom of the vial. In some cases the liquid 50 and material 49 remain in a slurry and as the piston advances toward the bottom of the vial the piston assembly 43 forces the liquid 50 through the piston filter 40 while moving a portion of the material 49 toward the bottom 46 of the vial to separate the fluid from the material. As the piston advances the slurry becomes thicker as liquid 50 passes through the piston filter 40 and eventually a bed of material 49 with little liquid 50 will be forced against the bottom 46 by the piston filter 40. The amount of liquid 50 remaining in the compacted bed of material 49 will vary with the size of the particles forming the bed and the nature of the stuff being removed from the liquid 50. It is believed undesirable to advance the piston a distance sufficient to force 80-90% of the liquid 50 pass through the filter. It is believed more desirable to have about 75% or less of the liquid pass through the piston filter 40, and preferably to pass about 25-50% of the liquid 10 through the piston filter 40.

Advantageously the stop 23 on piston 10 hits the proximal end 44 of the vial 42 to position the piston 10 relative to the vial 42. Thus, the distance L between the position stop 23 and the bottom 46 on the inside of vial 42 is shorter than the distance H. It is believed preferable to have the distance between the distal end of the piston assembly 43 and the bottom 46 of the vial 42 is between about 10% and 30% of the height H of the vial 42. The distal end of the piston assembly 43 and bottom 46 of vial 42 thus define a residual volume which may contain the material 49 and any remaining liquid 50. A distance of about 10% to 20% of the height H of the filter vial 42 is believed more preferable. But the distance between the distal end of the piston and the bottom of the vial will vary with the particular material 49 and liquid 50 being used. A minimum distance of at least 1 - 5 mm is believed desirable for most applications. In many applications a vial 42 having an internal diameter of about 3-9 mm and a height of about 32 mm is believed suitable.

Advantageously, the proximal seal 22 is sealingly engaged with the inner sidewall of the vial 42 when the position stop 23 abuts the end 44 of the vial 42. This provides further assurance that the material 49 and the portions of the liquid 50 entrapped by the material 49 remain in the vial 42 while the filtrate can be removed from the hollow body of the piston 10. Thus, the distance D (Fig. 3) is preferably less than the distance H as well as being less than the distance L.

Other seal types could also be used for seals 28, 22, 38, but are believed less desirable. For example, O-ring seals set in rectangular or semi-circular recesses could be used. But the seals 28, 22, 38 are preferably integrally molded or cast with the parts from which they extend. Further, the preferred piston 10, cup 30 and vial 42 are molded out of various plastics and that makes forming suitable recesses to hold the O-ring or even D-ring seals difficult because the recesses reduce the strength of the parts. The piston 10, cup 30 and vial 42 are preferably molded of a suitable plastic, preferably one that does not contaminate samples placed in the vial 42. The vial is preferably made of polyolefin, preferably polypropylene, or other suitable polymer. The filter 40 is preferably, but optionally made of Teflon, nylon, glass fiber or other filter materials such as PVDF (polyvinyldifloride) or PES (polyethersulphone), etc.

A fill line 54 is optionally placed on the outside of the vial 42 to indicate a maximum level of fluid placed inside the vial when the material 39 is in the vial. The walls of the vial are preferably sufficiently transparent or translucent so the placement of fluid inside the vial 42 can be seen from outside the vial to allow use of the fill line 54. The fill line 54 can be molded into the vial as an outwardly extending flange or inwardly extending recess, or the fill line can be marked by paint, marker, abrasion, laser etching, chemical etching, or other process leaving a visible indicia.

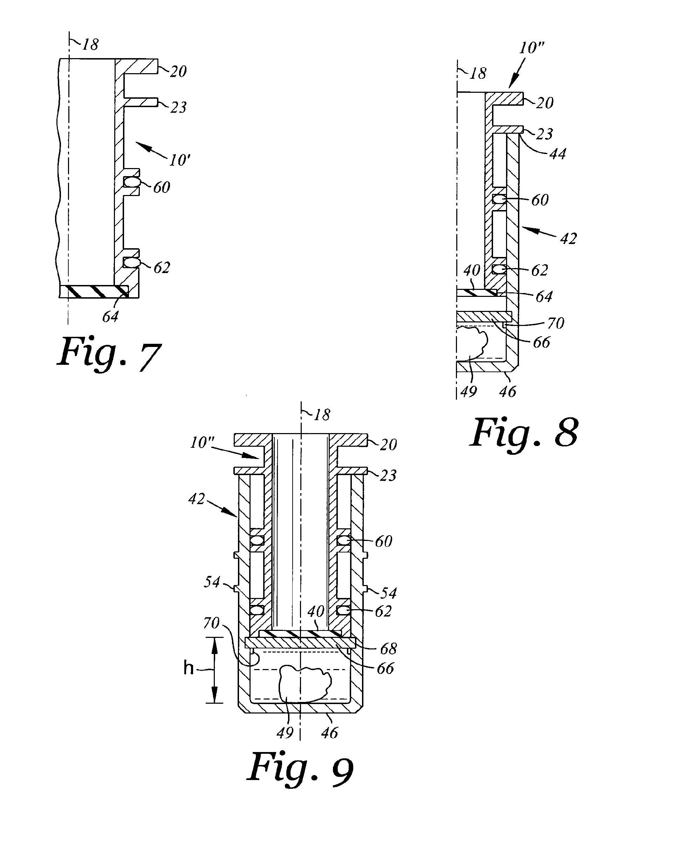

Referring to Figs. 7-9 and 11, a further embodiment is shown having tubular piston 10' with outwardly extending position stop 23 and a first proximal seal 60 formed by an O-ring held in a groove formed by two circular flanges extending outward from the piston 10' a distance less than the diameter of the O-ring. A second seal 62 is located adjacent the distal end of the piston 10' and preferably comprises an O-ring held in a groove formed by two circular flanges extending outward from the piston 10' a distance less than the diameter of the O-ring. The distal end of the piston 10 has an inward facing recess 64 on the inside of the tubular piston with that recess sized to receive filter 40. The filter 40 may be a disc shaped filter and may be press fit 64 into the recess 64 or otherwise fastened to the distal end of the piston 10'. The filter 40 blocks the distal end of the tubular piston 10' so that any fluid flowing into the interior of the tubular piston passes through the filter 40, as in the first embodiment of Figs. 1-6.

The piston 10' is sized to fit inside the vial 42 with the seals 60, 62 forming fluid tight seals against the interior sidewall of the vial. The piston 10' may be used as in the first embodiment to seal against the sidewall of the vial 42 and force fluid through the piston filter 40 as the tubular piston is advanced toward the bottom 46 of the vial 42, with the stop 23 limiting relative motion between the piston and the vial so the distal end of the piston is spaced a predetermined distance from the bottom of the vial.

The vial 42 preferably has a retaining device to retain a vial filter 66. The retaining device may take the form of an inwardly facing recess 68 extending away from the axis 18 and into the sidewall of the vial 42, or an inwardly extending protrusion 70 extending toward the axis 18 from the sidewall of the vial, or both. A small circular rib is believed suitable for the protrusion 70 and an annular recess is believed suitable for the recess 68, with the recess and protrusion configured to hold vial filter 40 in a predetermined location in the vial. Advantageously the protrusion 70 and/or recess 68 form a snap-lock to hold the vial filter 66 in place.

The vial filter 66 extends across the entire vial 42 and is offset a predetermined distance from the bottom 46 of the vial. Any fluid on the distal side of the vial filter 66 must pass through the vial filter 66 to get to the proximal side of the vial filter. The vial filter 66 has an upper surface that is located a distance h from the bottom 46 of the filter vial 12, and is orthogonal to the longitudinal axis 18.

During use the material 49 is placed in the bottom of the filter vial 42, with the vial filter 66 being placed into the vial thereafter and snapped into position where the filter is held. The vial filter holds the material 49 in position. This allows vials to be prepared with a predetermined amount of material 49 in the vial, with the vial filter 66 configured to prevent the material 49 from passing the filter 66. The liquid 50 may be added before the vial filter 42, but is preferably added afterwards. If the liquid 50 is added after the vial filter then the vial filter has to be selected to allow the liquid to pass through the filter along with any compounds to be retained by the material 49. The liquid 50 must be above the level of the vial filter 66 at least during filtration by the piston 10. If the liquid is below the vial filter 66 additional liquid may be added to mix with and dilute the slurry formed by the material 49 and the preexisting liquid. After the liquid 50 and material 49 are in contact a sufficient amount of time the piston 10' is inserted into the vial 42 and advanced toward the bottom 46 of the vial to force the liquid through the piston filter 40 and into the hollow body of the tubular piston 10'. The stop 23 is located to stop the distal end of the piston 10' before it reaches the vial filter 66, although in some circumstances the distal end of the piston may abut the vial filter. Thus, the stroke length L of the piston assembly 43 is less or equal to than H - h.

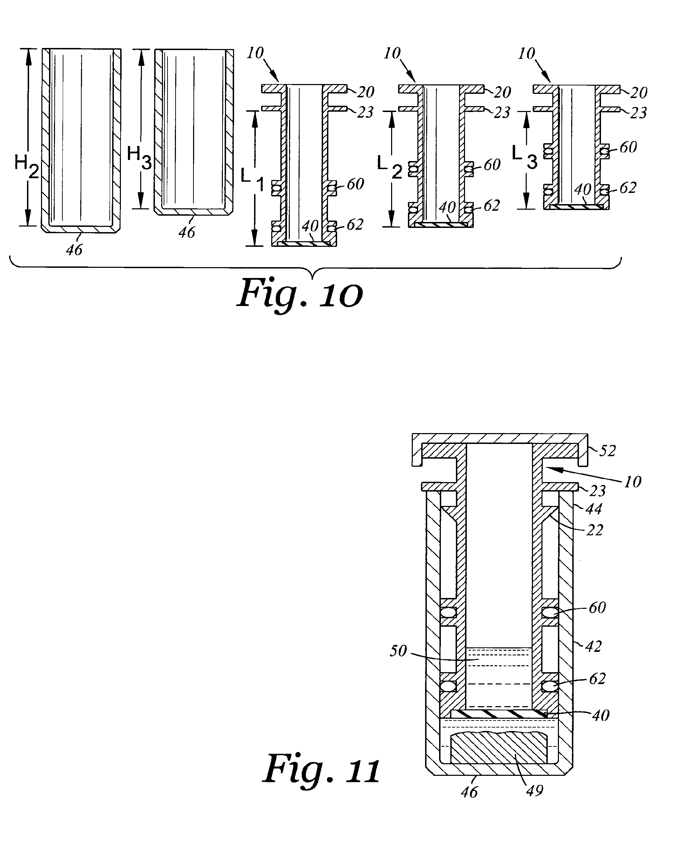

Because the amount of the material 49 may not be known until the vial is used, it may not be known how much volume is required in the bottom of the vial, and that means it may not be known where the piston 10, 10' should stop. It is thus desirable to provide kits having plungers with a variety of different stroke lengths L or vials having a different height as reflected in Fig. 10. Thus pistons with lengths of L₁, L₂ or L₃ may be used with different length vials having interior lengths or heights H₂ or H₃, recognizing that the length L is selected to be shorter than the length H when the parts are collected to form a kit, so that the material 49 is not forced into the filter 40. Thus, preferably the kits of plungers and vials are selected such that two or three different stroke lengths L are provided for a single filter vial, or several filter vials of varying heights H are provided for a single piston of length L, with none of the stroke lengths L and vial heights H being such that the distal end of the piston assembly would abut the bottom of the filter vial during use, and instead would have a minimum, predetermined distance between the vial's bottom and the end of the piston assembly to define a residual volume.

Advantageously the pistons 10 and vials 42 are selected such that there is always room at the bottom 46 of the vial. As reflected in Fig. 10, three pistons L₁, L₂ or L₃ of different length provide three different residual volumes if used in the same vial 42. Likewise, the use of vials 42 with interior cavities of different height H may be used with the same length piston 10 to achieve different residual volumes between the bottom of the piston assembly 43 and the bottom 46 of the vial 42. Advantageously, the kits have a single piston 10 and a plurality of vials 42 of different interior height H, or the kits have a single vial 42 and a plurality of piston assemblies 43 of different height H. In such cases, the piston assemblies 43, the vials 42, or both, are marked, preferably with printed indicia such as numbers, to reflect the residual volume achieved if the piston and vials are used together. This printed indicia may include color coding or marking a volume indicator on the side of the piston or vial or piston or piston assembly. For example, a set of three piston assemblies 43 and one vial 42 of a first color may have a different piston assemblies 43 marked with one of the numbers 5, 10 and 15 to reflect the residual volume in the vial when the selected piston is used with the vial of the same color. Likewise, three vials 42 and one piston assembly 43 all of a second color may have similar numbers on the vials to reflect the residual volume when used with the piston. Piston assemblies and vials of different colors may have printed indicia of different colors indicating the residual volumes when a piston assembly is used with a vial of the color in which the printed indicia (number) appears. There are a variety of ways to coordinate pistons and vials having different lengths L and heights H to achieve different residual volumes reflected by height h. For simplicity, and cost, kits with only a few extra piston assemblies of different length for one vial, or a few vial of different length for one piston, are preferred. Preferably there are fewer than five, and more preferably only one or two different length piston assemblies for each vial or different length vials for each piston assembly.

There is also provided an improved method of separating liquids. REeferring to Figs. 1-4 The method includes placing the material 49 in the bottom of a vial 42 and placing the liquid 50 in the bottom of the vial. The vial may have liquid 50 in it when the material is added or the liquid may be added after the material 49. The material 49 is selected to remove things from the liquid such as chemicals, molecules, gases or other things. The material 49 and liquid 50 are left together a suitable time for the removal to occur completely or to a desired extent, or left for a predetermined time. Typically they form a slurry as the material 49 falls apart in the liquid. The liquid is then separated from the material 49 by the piston assembly forcing liquid 50 through the piston filter 40 and into the body of the piston 10 from which the filtered liquid can be removed.

Referring to Figs. 8-10, the method may include placing material 49 in the bottom of the vial 42 and then placing vial filter 68 in the vial to hold the material in position. The vial and material may be then used, or the method may include placing a cap 52 ((Fig. 2) over the open, proximal end of the vial and either storing the assembly or shipping the vial and material. Instead of the cap 52, the distal end of a piston assembly 43 may be inserted into the vial a distance sufficient to hold the parts together while allowing removal of the piston assembly later. A liquid may be added to the previously prepared subassembly of the vial and material, with the liquid passing through the vial filter 66. That means the filter 66 has to be selected for certain liquids or that only certain liquids may pass through the filter. The material 49 is selected to remove things from the liquid such as chemicals, molecules, gases or other things. The material 49 and liquid 50 are left together a suitable time for the removal to occur completely or to a desired extent, or left for a predetermined time. Typically they form a slurry as the material 49 falls apart in the liquid. The vial filter 66 preferably does not allow the material 49 to pass, but the filter 66 may be a simple frit or porous mesh sufficient to restrain passage of solid material 49 but sufficiently porous to allow passage of material 49 when dissolved in or mixed with liquid 50. The method then includes separating the reacted liquid from the material 49 by moving the piston and vial relative to each other so the piston assembly forces liquid 50 through the piston filter 40 and into the body of the piston 10 from which the filtered liquid can be removed. Preferably the distal end of the piston assembly 43 does not abut vial filter 68, but it may. The method may also include holding the vial filter in place and thus holding the solid material 49 in the volume defined between the vial filter 66 and the bottom 46 of the vial 42, at least until the liquid 50 is added.

The vial 42 and piston assembly 43 provide a multi-tier filtration device allowing for total solids, resins, glass beads, and other semi-solid or total solid materials to be placed at the bottom of the filter vial 42 while giving enough clearance to do multiple extractions in one device. Previously, users with pills had to crush their pills in a mortar and pestle and then dump the components that may not be uniformly dissolving into the filter vials for dissolution testing, solubility, or friability testing. With the present invention a user can drop the pill into the bottom of the vial 42, or drop in multiple pills - without the need to crush them. The assembly allows for the pills to dissolve, or the user may add different agents for different functional testing.

There is thus provided a filter vial 42 with an internal cavity within which a user can perform secondary or tertiary manipulations and that allows for the eliminations of multiple vessels before the final sample extraction. Another example of the advantageous use of this invention would be with the material 49 comprising resins (e.g., quechers, different salts, spe, micro beads, luminex beads, binding beads, etc.) that trap what is not wanted to be tested from such samples 50 as proteins, matrices like food, urine, plasma, etc. After the filter vial 42 is filled with a given amount of these resins 49 and liquid 50 contain the sample to be tested, and after a suitable time is provided for removing unwanted things from the sample 50, then the final filtration may be performed within the vial by forcing the liquid through the piston filter 40 and into the body of the piston 10 where it may be removed for further use. This allows for what was previously a multi-step or component filled transfer to be performed in one vessel, vial 10. This allows for minimization of step error, and maximization of product integrity.

Using the vial 10 and piston assembly 43 of this invention, a filter vial for biologic extraction of DNA and protein extraction could be used in the cell, seed generation testing of genetic markers, by having multiple cells/seeds or single cell/seed broken added as the material 49 within the vial 42 and then adding different buffers as the liquid 50, with the combination or residual (filtered) liquid to come through the piston filter 40 and into the body of piston 10 for use.

The device can be used with bead beaters, paint shakers, and multiple type of disrupting machines to break-up clumps or solids within the matrices. The distal end could be used with a lead-in that would allow for easy insertion by automated robots for use in full automation of products. The plunger design could be made with multiple bottom shapes, and the interior of the bottom could be triangles, squares, and other shapes that allow for different current testing to be moved into this device.

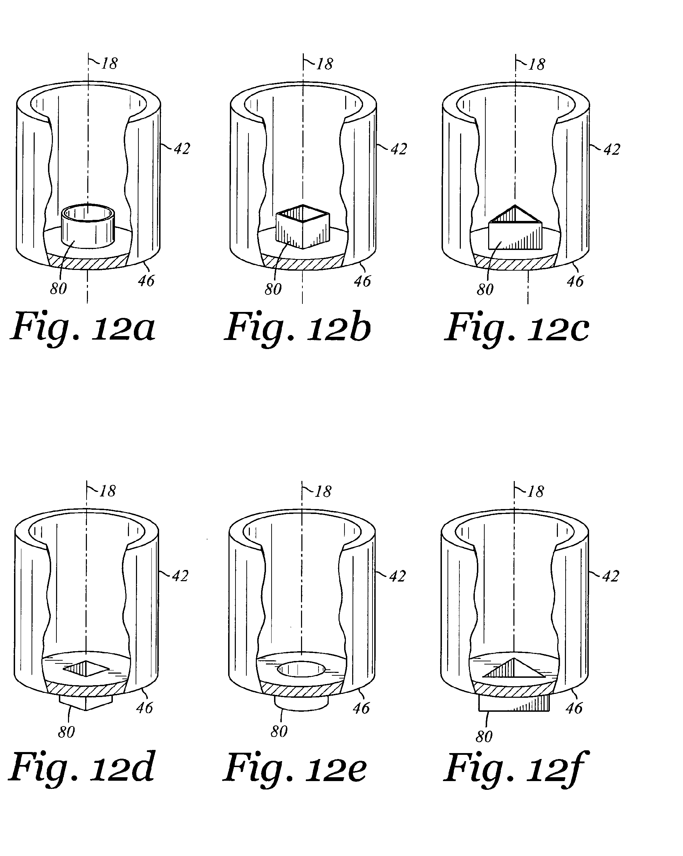

Referring to Figs. 12a-12c, in further variations, because the distal end of piston does not enter the bottom-most portion of the vial 42, that bottom portion may have various shapes, especially on the inside of the vial. Thus, while the upper portion of the vial 42 is preferably cylindrical to provide good fluid seals as the piston assembly slides along the inside of the vial, the bottom portion of the vial may have any of a variety of shapes, and may contain shapes within it, or extending from the bottom 46. Thus, the bottom portion of the vial may have an inset 80 having a square walled shape extending from the bottom 46 or sidewall of the vial (Fig. 12a, 12d), or a short-walled cylindrical shape extending from the bottom 46 (Fig. 12b, 12e), or a triangular shape as in Fig. 12c, 12f. It is believed advantageous if the shape of these interior walled portions 80 are sized to enclose a predetermined volume so that the volume enclosed by the shape 80 could be used to measure and hold a predetermined amount of material 49 placed in the walled volume. The walled shapes thus form sub-containers 80 of predetermined volume to measure the material 49, with the sub-containers 80 extending inward from the bottom 46, or extending outward along axis 18 from the bottom 46 but being in fluid communication with the inside of the vial.

The above description is given by way of example, and not limitation. Given the above disclosure, one skilled in the art could devise variations that are within the scope and spirit of the invention disclosed herein, including various ways of forming the seals between the piston 10, 10' and the inside of the vial 42. Likewise, various ways may be used to limit relative motion of the piston and vial in order to correctly position the distal end of the piston. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A filter vial apparatus having a longitudinal axis, comprising:
a tubular vial having a closed bottom, an open top and a sidewall extending therebetween and defining a periphery around the open top, the sidewall having an interior height H between the bottom and the open top;
a tubular piston with opposing distal and proximal ends with at least the distal end being open, the piston having walls defining a hollow interior, the piston having at least one seal configured to sealingly engage the sidewall of the vial abut an inner circumference of the sidewall when the piston is inserted into the vial, the piston having a position stop extending outward from the piston a distance sufficient to abut the periphery around the open top of the vial;
a piston filter connected to the distal end of the filter and blocking the distal end of the piston so any fluid must pass through the filter to enter the hollow interior from the distal end of the piston, the piston and piston filter forming a filter assembly, the position stop being located a distance L from the distal end of the piston assembly, the distance L being less than the height H to limit the distance which the piston assembly may be inserted into the filter vial during use.

2. The apparatus of Claim 1, wherein there are at least three seals, two of which are adjacent the distal end of the piston and all three of which are located and configured to engage the sidewall of the vial when the piston assembly is inserted into the filter vial;

3. A filter vial assembly, comprising:
a cylindrical walled vial with a closed bottom and open top connected by a sidewall defining a periphery of the open top, the vial having a hollow, tubular piston therein with a filter connected to a distal end of the piston to prevent fluid from flowing into the distal end of the piston unless it flows through the piston filter, the filter and piston forming a piston assembly, the piston having a position stop located and configured to engage a mating position stop on the vial when the piston assembly is inserted into the vial and advanced a predetermined distance toward the bottom of the piston but before the piston assembly abuts the bottom of the vial.

4. The filter vial assembly of Claim 3, wherein the position stop on the piston comprises an outwardly extending projection configured and located to abut the filter vial.

5. The filter vial assembly of Claim 3, further comprising a vial filter located a distance h from the bottom of the vial and extending across the vial to block the flow of fluid past the vial filter unless the fluid flows through the vial filter, the predetermined distance being selected so that the piston assembly does not extend past the vial filter during use.

6. The filter vial assembly of Claim 5, further comprising a sorbent phase extraction material located between the vial filter and the bottom of the vial, the extraction material selected to remove molecules, chemicals or compounds from a liquid sample.

7. The filter vial assembly of claim 3, further comprising a fluid in the bottom of the vial and a material selected to dissolve in the fluid and remove selected chemicals, molecules or compounds from the fluid.

8. The filter vial assembly of Claim 1 or 4, further comprising a cup extending over the distal end of the piston and interposing the filter between the cup and the piston to connect the filter to the piston assembly, the cup having at least one opening in a bottom of the cup to allow fluid access to the filter.

9. The filter vial assembly of Claim 6, wherein the filter vial has an interior height H between the filter vial bottom and the periphery defining the open top of the filter vial, and wherein the position stop is a distance L from the distal end of the piston assembly, and wherein the distance L is less than H.

10. The filter vial assembly of Claim 1 or 9, wherein the difference between L and H is about 10-30%, in particular about 10-20%, of H.

11. The filter vial assembly of Claim 1 or 9, wherein the filter vial includes a vial filter having an upper surface located a distance h from the bottom of the filter vial located and wherein the distance L is less than H - h.

12. A method of filtering a fluid using a filter vial having a cylindrical sidewall defining an open top and having a closed bottom opposite the top, and a tubular piston having an open bottom covered by a filter to form a piston assembly, the piston assembly fitting into the filter vial to seal against the sidewall and force fluid through the filter and into the body of the piston as the piston filter is advanced toward the bottom of the vial, comprising the steps of:
placing a fluid in the bottom of the vial;
placing a material in the bottom of the vial where the material is selected to remove chemicals or molecules from the fluid;
inserting the piston assembly into the open top of the filter vial and advancing the piston toward the bottom of the filter vial;
limiting the distance which the distal end of the piston assembly can advance toward the bottom by causing a position stop on the piston assembly to abut a mating stop on the filter vial, the distance being predetermined.

13. The method of Claim 12, wherein the filter vial includes a vial filter having an upper surface located a distance h from the bottom of the filter vial, the material being located between the vial filter and the bottom of the vial, and wherein the which the distal end of the piston assembly is inserted into the vial is limited so the distal end of the piston assembly does not extend past an upper surface of the vial filter.

14. A filter vial assembly having a longitudinal axis, comprising:
a tubular vial having a closed bottom, an open top and a sidewall extending therebetween and defining a periphery around the open top, the sidewall having an interior height H between the bottom and the open top;
a material in a bottom of the vial, the material selected to remove predetermined things from a liquid sample;
a vial filter connected to the filter vial and located to hold the material in the bottom of the vial, the vial filter having a top surface located a distance h from the bottom of the vial..

15. The filter vial assembly of Claim 14, wherein the vial has deformable walls and further comprising:
a tubular piston with opposing distal and proximal ends with at least the distal end being open, the piston having walls defining a hollow interior, the piston having at least one seal configured to sealingly engage the sidewall of the vial abut an inner circumference of the sidewall when the piston is inserted into the vial, the piston having a position stop extending outward from the piston a distance sufficient to abut the periphery around the open top of the vial; and
a piston filter connected to the distal end of the filter and blocking the distal end of the piston so any fluid must pass through the filter to enter the hollow interior from the distal end of the piston, the piston and piston filter forming a filter assembly, the position stop being located a distance L from the distal end of the piston assembly, the distance L being less than the height H minus the height h in order to limit the distance which the piston assembly may be inserted into the filter vial during use.
